# EUROPEAN PATENT APPLICATION

(11) **EP 4 770 071 A1**
(43) Date of publication of application: **01.07.2026**
(21) Application number: 25224846.3
(22) Date of filing: 18.12.2025
(51) Int. Cl.: H04N 1/00

(54) **IMAGE INSPECTION APPARATUS, IMAGE FORMING APPARATUS, IMAGE INSPECTION METHOD, AND PROGRAM**

(30) Priority: 25.12.2024 JP 2024229444
(71) Applicant: Konica Minolta, Inc., Tokyo 100-7015 (JP)
(72) Inventor: YOSHIOKA, Kyoka, Tokyo 100-7015 (JP)
(74) Representative: MFG Patentanwälte Meyer-Wildhagen Meggle-Freund Gerhard PartG mbB

(57) **Abstract**

An image inspection apparatus (100) including a controller (81) that detects a misregistration of an image formation position on a recording medium on which an image is formed by an image forming section (40). The controller has: a first detection mode in which the misregistration is detected based on a formation position of a position detection image formed at a predetermined position on the recording medium by the image forming section; and a second detection mode in which the misregistration is detected without the position detection image being formed by the image forming section.

## Description

### BACKGROUND OF THE INVENTION

### TECHNICAL FIELD

The present disclosure relates to an image inspection apparatus, an image forming apparatus, an image inspection method, and a program.

### DESCRIPTION OF RELATED ART

In an image forming apparatus (printing machine), adjustment to enable formation of an image at a predetermined position on a recording medium is referred to as registration. For the registration, a cross-shaped mark (register mark) is used as a register mark, and therefore, the registration is also referred to as register mark. Registration requires formation of a register mark at a predetermined position on a recording medium and measurement of the deviation amount of the position where the register mark is actually formed. As the register marks, in addition to register marks, rectangles, circles, and the like are used.

Japanese Unexamined Patent Publication No. 2001-270086 discloses a technique of detecting a misregistration between a watermark pattern and a printed pattern by reading the positions of a registration mark of the watermark pattern and a registration mark of the printed pattern. According to this technology, it is not necessary for a person to visually confirm whether the position of the printed pattern is correct. Furthermore, since the position of the printed pattern is automatically controlled using the detected deviation amount, manual adjustment work is not required.

### SUMMARY OF THE INVENTION

However, in the related art, it is assumed that the register mark (position detection image) is formed in order to detect the misregistration. Therefore, a misregistration cannot be detected for a job in which a register mark cannot be formed. In addition, it takes time and effort to add the register mark to the image. Furthermore, the register mark used for detection of misregistration needs to be finally cut and removed, resulting in waste of the recording medium. Furthermore, there is a problem in that registration cannot be performed on a recording medium having no margin for cutting.

The present disclosure has been made in consideration of the above-described problem in the conventional technology, and an object thereof is to enable detection of a misregistration of an image formation position without using a position detection image.

To achieve at least one of the abovementioned objects, according to an aspect of the present invention, there is provided an image inspection apparatus (100) comprising a controller (81) that detects a misregistration of an image formation position on a recording medium on which an image is formed by an image forming section (40), wherein the controller has:
a first detection mode in which the misregistration is detected based on a formation position of a position detection image formed at a predetermined position on the recording medium by the image forming section; and
a second detection mode in which the misregistration is detected without the position detection image being formed by the image forming section.

To achieve at least one of the abovementioned objects, according to another aspect of the present invention, there is provided an image inspection apparatus (100) comprising:
an image acquiring section that acquires a read image generated by reading, with a reading section, a recording medium on which an image is formed by an image forming section; and
a controller that inspects presence or absence of an abnormality in the read image based on a reference image stored in a storage section and the read image, wherein
the controller acquires information relating to a misregistration of the image formed on the recording medium based on the reference image and the read image, and controls an image formation position in the image forming section based on the acquired information relating to the misregistration of the image.

### BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention, wherein:
Fig. 1 is a schematic configuration diagram of an image forming apparatus in an embodiment of the present disclosure;
Fig. 2 is a block diagram illustrating the functional configuration of the image forming apparatus;
Fig. 3 is a flowchart illustrating image inspection processing executed in the image forming apparatus;
Fig. 4 is a flowchart illustrating the first misregistration detection processing;
Fig. 5 is a diagram illustrating an example of a recording medium on which register marks are formed;
Fig. 6 is a diagram illustrating a specific example of formation positions of register marks on a recording medium;
FIG. 7 is a diagram for explaining detection of a misregistration using a register mark;
Fig. 8 is a diagram illustrating an image for comparing the position of a predetermined register mark with the position of a register mark acquired from a read image;
Fig. 9 is a flowchart illustrating the second misregistration detection processing;
Fig. 10 is a flowchart illustrating the second misregistration detection processing;
FIG. 11 is a diagram for explaining an image position serving as a reference for image matching in the reference image and the read image;
Fig. 12 is a diagram illustrating a method of detecting the four corners of the recording medium from the read image and the reference image after alignment; and
Fig. 13 is a diagram illustrating an image for comparing points at four corners of a recording medium in a reference image after alignment with points at four corners of the recording medium in a read image.

### DETAILED DESCRIPTION

Hereinafter, one or more embodiments of the present invention will be described with reference to the drawings. However, the scope of the invention is not limited to the disclosed embodiments.

In the following, embodiment of the present disclosure will be described with reference to the drawings. The advantages and features provided by the embodiment will be understood from the following detailed description and the drawings. However, the scope of the present disclosure is not limited to the embodiment disclosed below or the illustrations in the drawings.

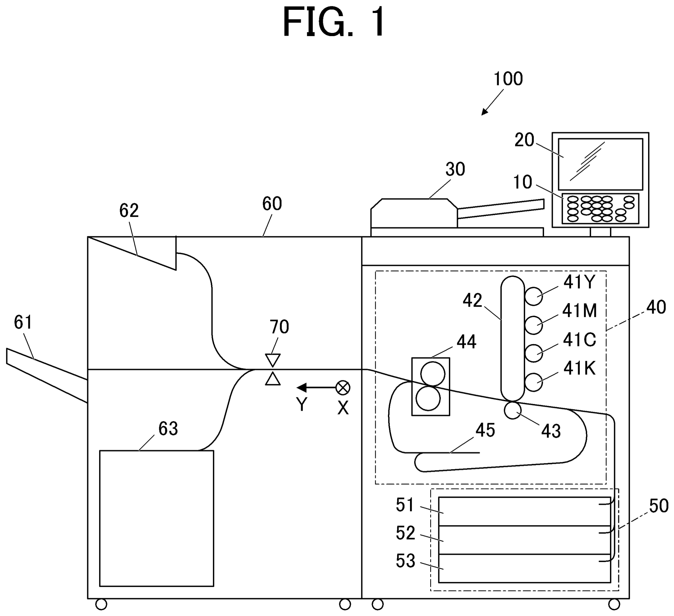

FIG. 1 is a schematic configuration diagram of an image forming apparatus 100 as an image inspection apparatus and an image forming apparatus according to the present embodiment. The image forming apparatus 100 forms a color image on a recording medium such as a sheet by an electrophotographic method. The image forming apparatus 100 forms an image on the basis of image data obtained by reading an image from a document or image data received from an external device. The image forming apparatus 100 includes an operation part 10, a display part 20, a document reading unit 30, an image forming section 40 (image forming section), a supply section 50, a post-processing section 60, an image reading section 70, and the like.

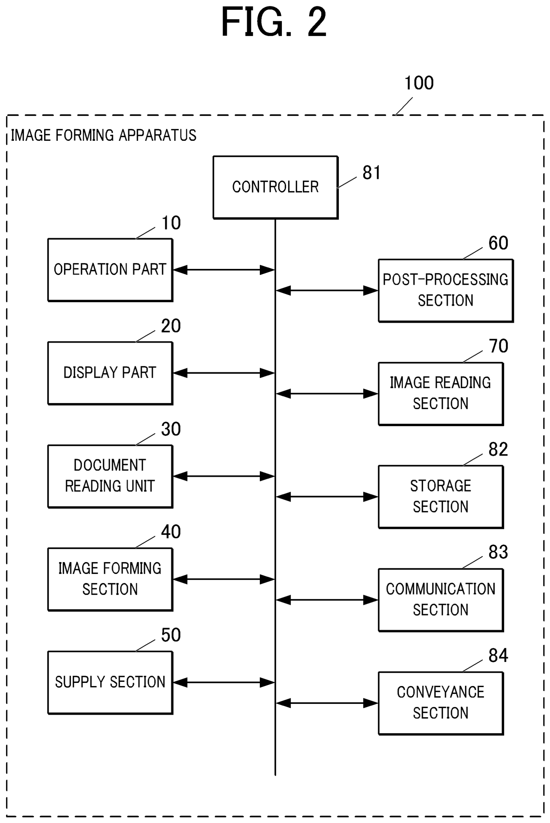

The operation part 10 outputs an operation signal based on a user operation to a controller 81 (hardware processor) (see Fig. 2). The operation part 10 includes various operation keys and a touch screen. The various operation keys receive various instruction operations from a user. The touch screen is formed so as to cover the display screen of the display part 20. The touch screen receives a touch operation on the display screen and detects a touch position.

The display part 20 is configured by a liquid crystal display (LCD). The display part 20 displays various screens according to an instruction of a display signal input from the controller 81.

The document reading unit 30 includes an automatic document feeder (ADF) and a scanner. The document reading unit 30 outputs image data obtained by reading the image of the document to the controller 81.

The image forming section 40 forms an image on the recording medium supplied from the supply section 50. The image forming section 40 includes photosensitive drums 41Y,41M,41C, and 41K corresponding to the respective colors of yellow, magenta, cyan, and black. The image forming section 40 further includes an intermediate transfer belt 42, a secondary transfer roller 43, a fixing section 44, and a reversing mechanism 45.

The image forming section 40 uniformly charges the photosensitive drum 41Y, and then performs scanning exposure with a laser beam based on the image data of the yellow color to form an electrostatic latent image. Next, the image forming section 40 makes a yellow toner adhere to the electrostatic latent image on the photosensitive drum 41Y to develop the electrostatic latent image.

Since the photosensitive drums 41M,41C, and 41K are the same as the photosensitive drum 41Y except that the colors to be handled are different, the description thereof will be omitted.

The image forming section 40 sequentially transfers the toner images in respective colors formed on the photosensitive drums 41Y, 41M, 41C, and 41K onto the rotating intermediate transfer belt 42 (primary transfer). That is, a color toner image in which four toner images are superimposed is formed on the intermediate transfer belt 42. The image forming section 40 collectively transfers the color toner images on the intermediate transfer belt 42 onto a recording medium by the secondary transfer roller 43 (secondary transfer).

The fixing section 44 fixes the toner image to the recording medium by applying heat and pressure.

When images are formed on both sides of a recording medium, the reversing mechanism 45 reverses the sides of the recording medium.

The supply section 50 includes supply trays 51 to 53 and supplies a recording medium to the image forming section 40. The supply trays 51 to 53 store recording medium of a predetermined paper type and size for each tray.

The post-processing section 60 performs post-processing on the recording medium on which the image has been formed by the image forming section 40, as necessary. For example, the post-processing includes cutting processing, sorting processing, stapling processing, punch processing, folding processing, and bookbinding processing. The post-processing section 60 ejects the recording medium on which the image is formed to ejection trays 61 and 62. Alternatively, the post-processing section 60 accumulates the recording medium on which the image is formed in the large-capacity stacker 63.

The image reading section 70 (reading section) is provided in the conveyance direction of the recording medium (Y direction illustrated in Fig. 1) downstream of the image forming section 40. The image reading section 70 reads a conveyed recording medium and generates a read image (image data). The image reading section 70 outputs the generated read image to the controller 81. The image reading section 70 is a color sensor which receives light emitted from a light source and reflected off the surface of the recording medium with a light receiving element and outputs a signal corresponding to the intensity of the light. The image reading section 70 is configured by a line sensor in which a plurality of light receiving elements are arranged at a predetermined interval in a direction (X direction shown in FIG. 1) orthogonal to the conveyance direction (Y direction) of the recording medium. For example, the image reading section 70 is used when reading an image formed on a recording medium by the image forming section 40 and inspecting the position of the image, the color of the image, stains, and the like.

FIG. 2 is a block diagram illustrating a functional configuration of the image forming apparatus 100. As shown in FIG. 2, the image forming apparatus 100 includes an operation part 10, a display part 20, a document reading unit 30, an image forming section 40, a supply section 50, a post-processing section 60, an image reading section 70, a controller 81, a storage section 82 (storage), a communication section 83, a conveyance section 84, and the like. Description of the function components already described will be omitted.

The controller 81 includes a central processing unit (CPU), a read only memory (ROM), a random access memory (RAM), and the like. The CPU reads various processing programs stored in the ROM in response to an operation signal input from the operation part 10 or an instruction signal received by the communication section 83, and develops the read programs in the RAM. The CPU centrally controls the operation of each unit of the image forming apparatus 100 in accordance with the expanded program.

The storage section 82 is configured by a nonvolatile storage device such as a hard disk or a flash memory, and stores various data. For example, a reference value V is stored in advance in the storage section 82.

The communication section 83 exchanges data with an external device connected to a network such as a local area network (LAN).

The conveyance section 84 includes conveyance rollers for conveying the recording medium. The conveyance section 84 conveys the recording medium in the image forming apparatus 100. For example, the conveyance section 84 conveys the recording medium stored in the supply trays 51 to 53 of the supply section 50 to the image forming section 40. The conveyance section 84 conveys a recording medium on which an image is formed by the image forming section 40. The conveyance section 84 conveys a recording medium whose image is to be read by the image reading section 70. The conveyance section 84 conveys the recording medium after image formation to the ejection tray 61, 62 or the large-capacity stacker 63.

The controller 81 detects the misregistration of the image formation position in the recording medium on which the image is formed by the image forming section 40. The misregistration includes a shift from a position where an image is to be formed on the recording medium, a front/back misregistration in double-sided printing, a color misregistration, and the like.

The controller 81 has a first detection mode and a second detection mode for detection of the misregistration of the image formation position.

The first detection mode is a mode in which a misregistration is detected on the basis of formation positions of position detection images formed at predetermined positions on a recording medium by the image forming section 40. The predetermined position is stored in the storage section 82. The position detection image is an image used for registration in image formation, and is also referred to as a register mark. As the position detection images, register marks (cross-shaped marks), rectangles, circles, and the like are used.

The second detection mode is a mode in which a misregistration is detected without forming a position detection image by the image forming section 40.

The controller 81 (image acquisition section) acquires a read image generated by the image reading section 70 (reading section, reading section) reading a recording medium on which an image is formed by the image forming section 40.

In the first detection mode, the controller 81 controls the image forming section 40 to form the position detection image at a predetermined position on the recording medium. In the first detection mode, the controller 81 detects the misregistration based on the predetermined position and the position of the position detection image in the read image.

In the second detection mode, the controller 81 detects a misregistration based on the reference image stored in the storage section 82 and the read image. The reference image is registered in advance in the storage section 82. The reference image may be an RIP image (RIP data) or an image generated by reading an image formed on a recording medium (image without misregistration or abnormality).

In the second detection mode, the controller 81 detects a misregistration based on alignment by image matching using an image included in the reference image and an image included in the read image.

After the alignment, the controller 81 detects a misregistration based on an edge of the recording medium detected from the read image. For example, the controller 81 detects a boundary line (edge) between the recording medium area and the background area from the read image. The recording medium area is an area corresponding to the recording medium in the image. The background area is an area corresponding to the outside of the recording medium in the image. Specifically, the controller 81 determines, from the distribution (histogram or the like) of luminance values in the read image, such a threshold value as to separate the luminance values corresponding to the recording medium area and the luminance values corresponding to the background area. The controller 81 detects the edge of the recording medium in the read image using the threshold value. Normally, since the recording medium is rectangular, the controller 81 detects four straight lines as the edges of the recording medium from the read image. The controller 81 acquires positions of four points as intersections of the four straight lines, and determines the positions of the four points as the positions of the four corners of the recording medium.

Based on the reference image and the read image, the controller 81 performs an inspection of the presence or absence of abnormality in the read image. For example, the controller 81 inspects whether or not the color of the image included in the read image matches the color of the image included in the reference image at the positions corresponding to each other. Further, the controller 81 inspects whether or not the read image is contaminated.

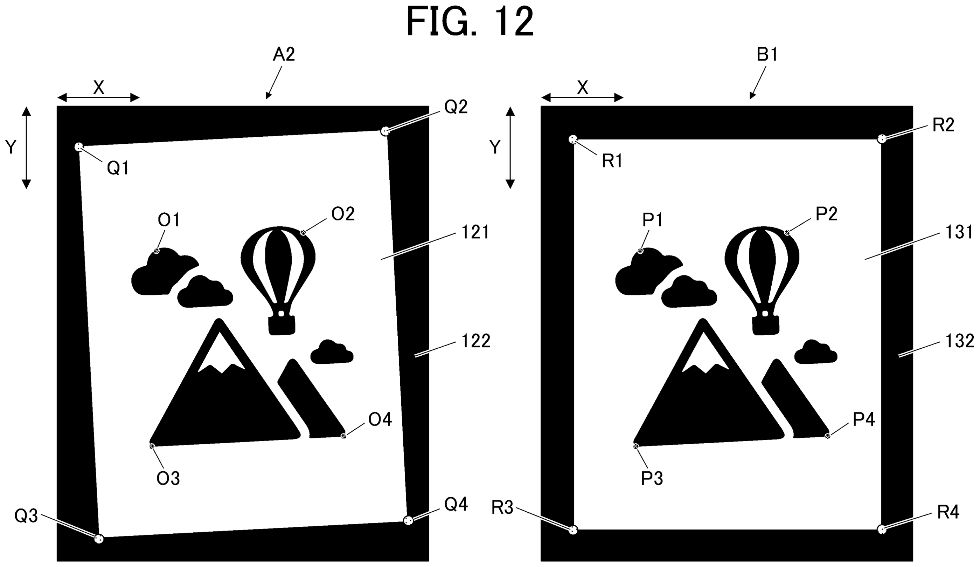

Based on the reference image and the read image, the controller 81 acquires information on the misregistration of the image formed on the recording medium. The information on the misregistration of the image includes, for example, a misregistration in the X direction (refer to Fig. 1, Fig. 12, and the like), a misregistration in the Y direction (refer to Fig. 1, Fig. 12, and the like), and a deviation amount. The controller 81 controls the image formation position in the image forming section 40 based on the acquired information on the misregistration of the image. That is, the controller 81 has a registration function.

The controller 81 determines the presence or absence of a misregistration of the image formation position by the image forming section 40 by obtaining a deviation amount from a target position with respect to the image formed on the recording medium. For example, the controller 81 detects the front-and-back misregistration at the time of double-sided printing based on the deviation amount.

The controller 81 feeds back the deviation amount to an adjustment value for correcting the misregistration.

The controller 81 controls the conveyance section 84 to eject the recording medium in which the misregistration is detected to an ejection tray different from an ejection tray to which a normal recording medium is ejected.

Next, operation of the image forming apparatus 100 will be described.

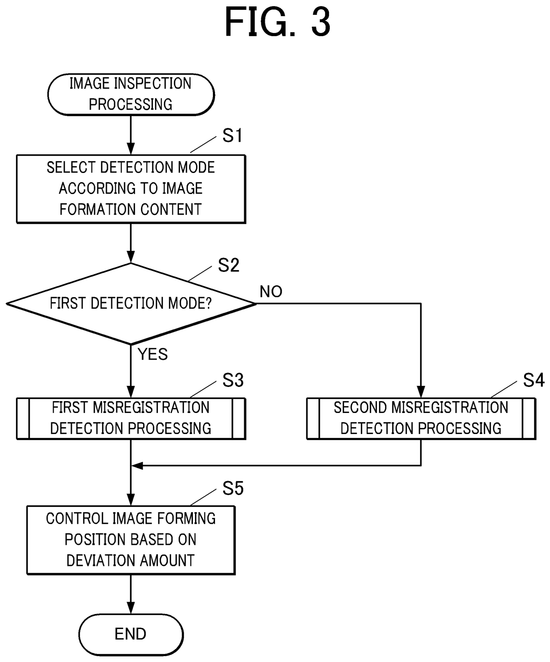

FIG. 3 is a flowchart showing an image inspection processing executed in the image forming apparatus 100. This processing is implemented by software processing in cooperation of the CPU of the controller 81 and the program stored in the ROM.

First, the controller 81 selects a detection mode in the detection of the misregistration in accordance with the image formation content related to the print job (step S1). The controller 81 selects one of the first detection mode and the second detection mode according to the size of the recording medium, the presence or absence of cutting, the image to be formed, and the like. Furthermore, the controller 81 may select a detection mode specified by a user by receiving the specification from the operation part 10 by the user.

Next, the controller 81 determines whether or not the detection mode selected in step S1 is the first detection mode (step S2).

If the selected detection mode is the first detection mode (step S2; YES), the controller 81 executes first misregistration detection processing (step S3). The first misregistration detection processing is misregistration detection processing in the first detection mode.

When the selected detection mode is not the first detection mode in step S2 (NO in step S2), that is, when the selected detection mode is the second detection mode, the controller 81 performs second misregistration detection processing (step S4). The second misregistration detection processing is misregistration detection processing in the second detection mode.

Step S3 or after step S4, the controller 81 controls the image formation position in the image forming section 40 based on the detected deviation amount (step S5). Specifically, the controller 81 corrects the image formation position in the image forming section 40 so as to eliminate the misregistration in the image forming section 40.

Thus, the image inspection processing ends.

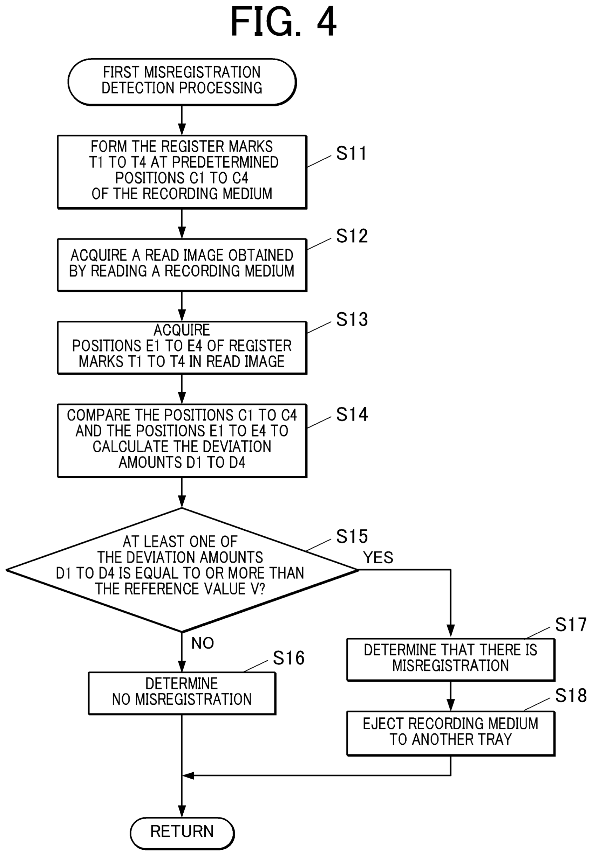

The first misregistration detection processing (step S3) will be described with reference to Fig. 4. In the first misregistration detection processing (first detection mode), a register mark is used as a position detection image. In the first misregistration detection processing, it is assumed that register marks are formed at predetermined positions in the vicinity of four corners of a recording medium during image formation.

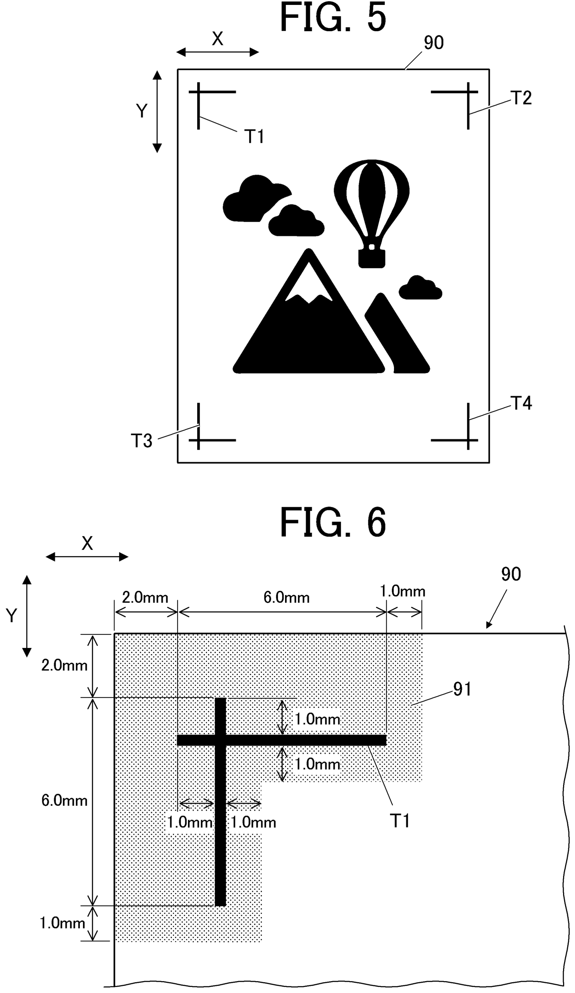

Fig. 5 illustrates an example of a recording medium 90 on which register marks T1 to T4 are formed. The register marks T1 to T4 are a type of register mark and include two line segments orthogonal to each other. The respective register marks T1 to T4 are arranged near the four corners of the recording medium 90. The positions of the register marks T1 to T4 are determined by the distances from the edges of the recording medium 90.

Note that the X direction illustrated in Fig. 5 is a direction (main scanning direction) orthogonal to the conveyance direction of the recording medium. The Y direction illustrated in Fig. 5 is a conveyance direction (subscanning direction) of the recording medium. The same applies to the X direction and the Y direction illustrated in the other drawings.

Fig. 6 shows specific examples of positions where register marks T1 are formed on the recording medium 90. The register mark T1 is formed with toner of a color for which a misregistration is to be detected. Toner of a plurality of colors may be superimposed to form a register mark T1, and color misregistration may be detected. Note that the periphery of the register mark T1 is defined as a hollow area 91 so that the register mark T1 is conspicuous. The void area 91 is an area where toner of all colors are not applied.

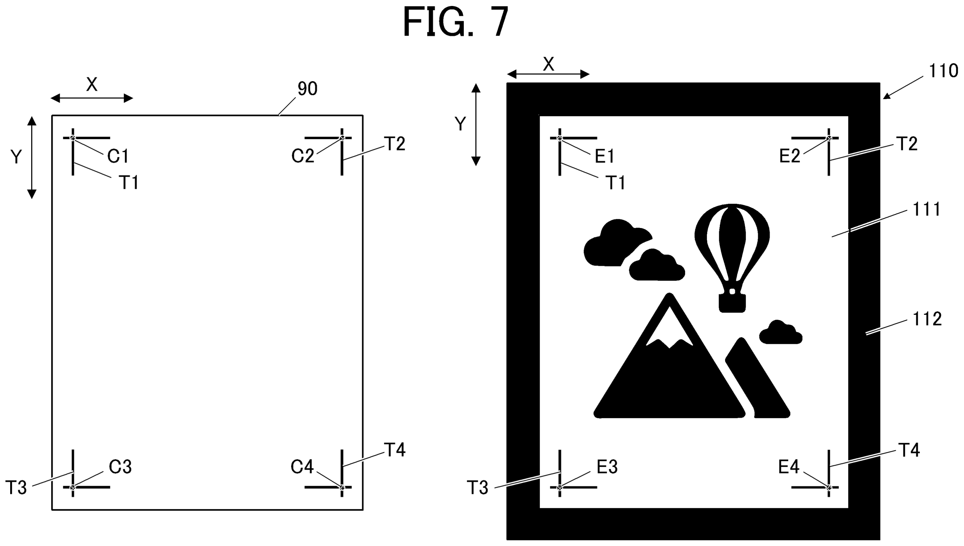

First, the controller 81 controls the image forming section 40 to form the register marks T1 to T4 at the predetermined positions C1 to C4 on the recording medium in addition to the image to be formed as the printed material (step S11). The left diagram of Fig. 7 illustrates an example of positions C1 to C4 of the recording medium 90 where the register marks T1 to T4 are to be formed. The controller 81 controls the image forming section 40 to form the register marks T1 to T4 such that the intersection points of the cross in the register marks T1 to T4 match the respective positions C1 to C4 on the recording medium 90.

Next, the controller 81 controls the image reading section 70 to read the recording medium on which the register marks T1 to T4 are formed by the image forming section 40 and generate a read image. The controller 81 controls the conveyance section 84 to cause the image reading section 70 to read the recording medium while conveying the recording medium. The controller 81 acquires, from the image reading section 70, the read image 110 generated by reading the recording medium on which the register marks T1 to T4 are formed (step S12). The right diagram of Fig. 7 illustrates an example of the read image 110. The read image 110 includes a recording medium area 111 and a background area 112. The recording medium area 111 includes register marks T1 to T4.

Next, the controller 81 acquires positions E1 to E4 (coordinates) of the register marks T1 to T4 in the read image 110 (step S13). To be specific, the controller 81 detects the register marks T1 to T4 from the read image 110, and obtains the positions E1 to E4 of the intersections of the crosses in the respective register marks T1 to T4.

Next, the controller 81 compares the predetermined positions C1 to C4 and the positions E1 to E4 acquired in step S13, and calculates the deviation amounts D1 to D4 of the register marks (step S14). The controller 81 calculates the deviation amounts D1 to D4 from the difference between the positions C1 to C4 and the positions E1 to E4 in each of the X direction and the Y direction.

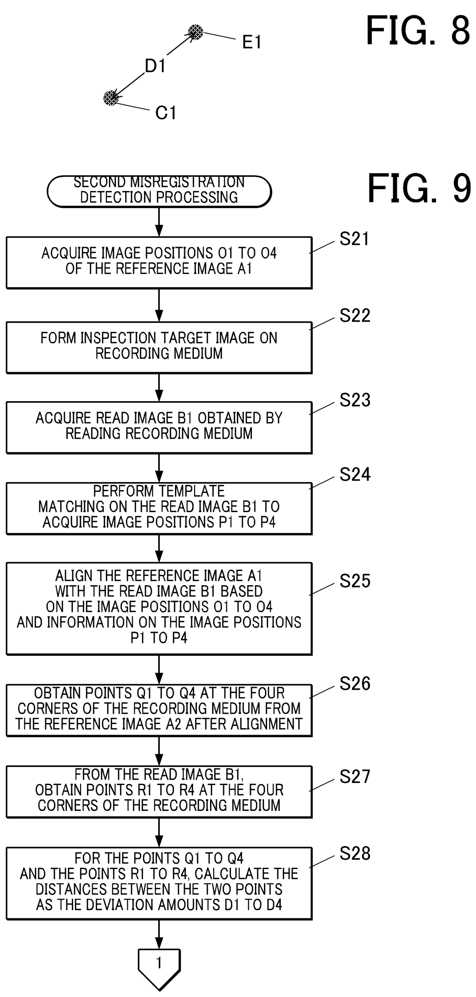

FIG. 8 shows an image for comparing the predetermined position C1 of the register mark T1 with the position E1 of the register mark T1 acquired from the read image 110. The distance between the positions C1 and E1 is the deviation amount D1.

Here, the controller 81 determines whether at least one of the deviation amounts D1 to D4 is equal to or more than a preset reference value V (step S15). When all of the amounts of deviation amounts D1 to D4 are smaller than the reference value V (step S15; NO), the controller 81 determines that there is no misregistration (step S16).

In step S15, if at least one of the deviation amounts D1 to D4 is equal to or more than the reference value V (step S15; YES), the controller 81 determines that there is misregistration (step S17). The controller 81 controls the conveyance section 84 to eject the recording medium having the misregistration to an ejection tray different from the ejection tray to which the normal recording medium are ejected (step S18).

After step S16 or step S18, the first misregistration detection processing ends.

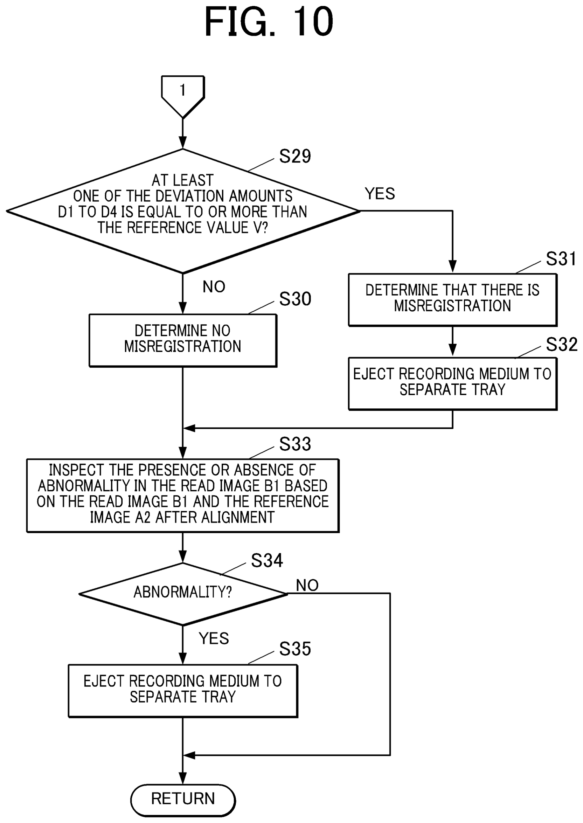

The second misregistration detection processing (step S4) will be described with reference to Fig. 9 and Fig. 10. In the second misregistration detection processing (second detection mode), the misregistration is detected by comparison with the reference image without using the position detection image (register mark).

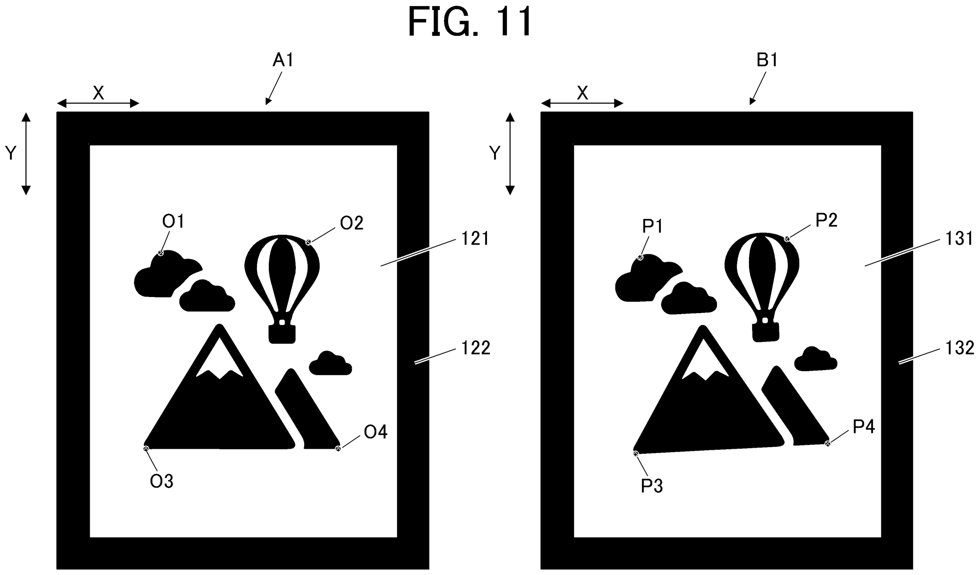

The left diagram of Fig. 11 illustrates an example of the reference image A1. The reference image A1 includes a recording medium area 121 and a background area 122. Note that also in a case where the reference image A1 is a RIP image, the background area 122 corresponding to the outside of the recording medium area 121 is added in a pseudo manner to the reference image A1.

First, the controller 81 searches the reference image A1 for an image formation position in the image, and acquires image positions O1 to O4 serving as standards (model points) for image matching (step S21). In addition, the controller 81 acquires images around the image positions O1 to O4 as template images. The image formation position is a area (print area) where an image is actually formed. It is desirable that the image positions O1 to O4 be positions close to the respective four corners of the recording medium in the printing area. The detection accuracy of misregistration increases as the image positions O1 to O4 are closer to the four corners of the recording medium. Furthermore, the template image is desirably an image suitable for template matching.

Next, the controller 81 controls the image forming section 40 to form an inspection target image on the recording medium (step S22). The inspection target image is an image corresponding to the reference image A1, and is an image to be inspected with reference to the reference image A1.

Next, the controller 81 controls the image reading section 70 to read the recording medium on which the inspection target image has been formed by the image forming section 40 and generate a read image B1. The controller 81 controls the conveyance section 84 to cause the image reading section 70 to read the recording medium while conveying the recording medium. The controller 81 acquires, from the image reading section 70, the read image B1 generated by reading the recording medium on which the inspection target images are formed (step S23). The right part of Fig. 11 illustrates an example of the read image B1. The read image B1 includes a recording medium area 131 and a background area 132.

Next, the controller 81 performs template matching on the read image B1 with reference to the image positions O1 to O4, and acquires the image positions P1 to P4 of the read image (step S24). To be specific, the controller 81 uses the template image acquired from the reference image A1 and the image positions O1 to O4 to find a portion having the highest similarity to the template image from the read image B1. The controller 81 sets points corresponding to the image positions O1 to O4 of the portion found from the read image B1 as the image positions P1 to P4.

Next, based on the image positions O1 to O4 and the information on the image positions P1 to P4, the controller 81 aligns the reference image A1 with the read image B1 (step S25). To be specific, the controller 81 rotates and translates the reference image A1 including the edges of the recording medium such that the image positions O1 to O4 in the reference image A1 overlap the image positions P1 to P4 in the read image B1, respectively. The left diagram of Fig. 12 illustrates the reference image A2 after the alignment.

Next, as illustrated in the left part of Fig. 12, the controller 81 obtains, from the reference image A2 after the alignment, points Q1 to Q4 (coordinate) at four corners of the recording medium (recording medium area 121) (step S26). To be specific, the controller 81 detects four straight lines as the edges of the recording medium area 121 from the reference image A2 after the alignment. The controller 81 acquires the positions of four points as the intersections of the four straight lines, and sets the positions of the four points as the positions of the four corners (points Q1 to Q4) of the recording medium area 121.

Next, as illustrated in the right part of Fig. 12, the controller 81 obtains, from the read image B1, points R1 to R4 (coordinates) at four corners of the recording medium (recording medium area 131) (step S27). To be specific, the controller 81 detects four straight lines as the edges of the recording medium area 131 from the read image B1. The controller 81 acquires the positions of four points as the intersections of the four straight lines, and sets the positions of the four points as the positions of the four corners (points R1 to R4) of the recording medium area 131.

Next, the controller 81 calculates the distances between the two points, for the points R1 to R4 in the read image B1 and the points Q1 to Q4 in the reference image A2 after the alignment as the deviation amounts D1 to D4 (step S28). The controller 81 calculates the deviation amounts D1 to D4 from the difference between the points Q1 to Q4 and the points R1 to R4 in each of the X direction and the Y direction.

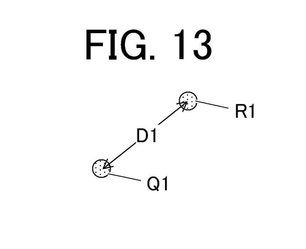

Fig. 13 illustrates an image for comparing the point Q1 and the point R1. A distance between the point Q1 and the point R1 is a deviation amount D1.

Turning to Fig. 10, the controller 81 determines whether at least one of the deviation amounts D1 to D4 is equal to or more than a preset reference value V (step S29). Note that the reference value V used in step S29 may be a value different from the reference value V used in step S15 of the first misregistration detection processing (refer to Fig. 4). When all of the deviation amounts D1 to D4 are smaller than the reference value V (step S29; NO), the controller 81 determines that there is no misregistration (step S30).

In step S29, if at least one of the deviation amounts D1 to D4 is equal to or more than the reference value V (step S29; YES), the controller 81 determines that there is misregistration (step S31). The controller 81 controls the conveyance section 84 to eject the recording medium having the misregistration to an ejection tray different from the ejection tray to which the normal recording medium are ejected (step S32).

After step S30 or step S32, the processing proceeds to step S33. In step S33, based on the read image B1 and the reference image A2 after the alignment, the controller 81 performs an inspection for the presence or absence of abnormality in the read image B1. Here, the controller 81 targets abnormalities other than the misregistration as inspection targets. The abnormality in the read image B1 includes image color, stain, and the like. For example, the controller 81 generates a difference image between the read image B1 and the reference image A2 after alignment. The controller 81 generates a difference image by calculating a difference in pixel value (luminance value, RGB value, or the like) of each pixel between both images. The controller 81 inspects the presence or absence of abnormality in the read image B1 by determining whether or not each pixel of the difference image exceeds a predetermined threshold value.

Next, the controller 81 determines whether the read image B1 has an abnormality other than a misregistration (step S34). If the read image B1 has an abnormality other than the misregistration (step S34; YES), the controller 81 controls the conveyance section 84 to eject the recording medium having the abnormality to an ejection tray different from the ejection tray to which normal recording medium are ejected (step S35).

After step S35 or in step S34, when there is no abnormality other than the misregistration in the read image B1 (step S34; NO), the second misregistration detection processing ends.

Note that in the image inspection processing (see Fig. 3), one of the first detection mode and the second detection mode is selected in step S1. Alternatively, the controller 81 may select both the first detection mode and the second detection mode, and perform both the first misregistration detection processing and the second misregistration detection processing. Note that among the processes included in the first misregistration detection processing and the second misregistration detection processing, the formation of an image by the image forming section 40 and the reading of an image by the image reading section 70 may be performed on the same recording medium. In a case where it is determined that there is a misregistration in any one of the first misregistration detection processing and the second misregistration detection processing, the controller 81 adopts the determination result of the misregistration detection processing in which it is determined that there is a misregistration. Further, when it is determined that there is a misregistration in both of the first misregistration detection processing and the second misregistration detection processing, the controller 81 adopts both of the determination results. Next, the controller 81 outputs a determination result for each of the detected misregistration so as to indicate which of the misregistration detection processing has resulted in the determination.

As described above, according to the present embodiment, the controller 81 of the image forming apparatus 100 has the first detection mode and the second detection mode for the detection of the misregistration of the image formation position. In the second detection mode, the controller 81 detects a misregistration without formation of a position detection image (a register mark such as a register mark) by the image forming section 40. Therefore, the controller 81 can detect the misregistration of the image formation position without using the position detection image.

By using the second detection mode, the controller 81 can save time and labor for forming the position detection image on the recording medium and cutting the position detection image from the recording medium. In addition, since the controller 81 does not assume the cutting of the recording medium in the second detection mode, it is possible to detect the misregistration with respect to not only the irregular sheet but also the regular sheet.

In the first detection mode, the controller 81 detects the misregistration of the image formation position based on the predetermined position and the position of the position detection image in the read image. The controller 81 can accurately detect a misregistration by using the position detection images in the first detection mode.

In the second detection mode, the controller 81 detects the misregistration of the image formation position based on the reference image and the read image of the inspection target image. Thus, the controller 81 can detect the misregistration of the image formation position without using the position detection image.

Specifically, in the second detection mode, the controller 81 detects a misregistration based on alignment by image matching using an image included in the reference image and an image included in the read image. The controller 81 can use information on the area where the image actually exists to perform alignment between the reference image and the read image.

After the alignment, the controller 81 detects a misregistration based on an edge of the recording medium detected from the read image. Thus, the controller 81 can detect the misregistration based on the information on the recording medium area that is the largest available area. Furthermore, even when the four corners of the recording medium are not included in the read image due to corner folding or the like, the controller 81 can accurately acquire the recording medium area.

Based on the reference image and the read image, the controller 81 performs an inspection for the presence or absence of abnormality in the read image. Thus, the controller 81 can perform the normal inspection operation together with the detection of the misregistration.

The controller 81 acquires, based on the reference image and the read image, information on a misregistration of the image formed on the recording medium, and controls, based on the acquired information on the misregistration of the image, an image formation position in the image forming section 40. Thus, the controller 81 can correct the image misregistration in the image forming section 40.

Note that the descriptions in the above embodiment are examples of the image inspection apparatus, the image forming apparatus, the image inspection method, and the program according to the present disclosure and are not limited thereto. The detailed configuration and the detailed operation of each part forming the apparatus can also be appropriately changed without departing from the spirit of the present disclosure.

For example, in the above-described embodiment, the case where the image forming apparatus 100 (image inspection apparatus) includes the image forming section 40 and the image reading section 70 has been described. Instead of this, the image inspection apparatus may acquire a read image generated by an external image reading section (image reading device) reading a recording medium on which an image is formed by an external image forming section (image forming apparatus), and set the read image as an inspection target. Further, in the above-described embodiment, each process performed by the image forming apparatus 100 may be performed by a plurality of apparatuses in cooperation with each other.

Furthermore, in the second misregistration detection processing (see Figs. 9 and 10), also in a case where the reference image is an RIP image, a background area corresponding to the outside of the recording medium area is assumed to be added in a pseudo manner to the reference image. Alternatively, when the reference image is an RIP image, no background area may be added to the reference image. In this case, the controller 81 may treat the end portion of the image data of the reference image as the position corresponding to the edge of the recording medium.

The computer-readable medium that stores the program for executing each processing is not limited to the above-described example. Furthermore, a carrier wave may be applied as a medium for providing data of the program via a communication line.

The disclosed embodiment is for purposes of explanation and example only, and is not intended to be limiting. The scope of the present disclosure should be interpreted by the description in the claims.

Although embodiments of the present invention have been described and illustrated in detail, the disclosed embodiments are made for purposes of illustration and example only and not limitation. The scope of the present invention should be interpreted by terms of the appended claims.

## Claims

1. An image inspection apparatus (100) comprising a controller (81) that detects a misregistration of an image formation position on a recording medium on which an image is formed by an image forming section (40), wherein
the controller has:
a first detection mode in which the misregistration is detected based on a formation position of a position detection image formed at a predetermined position on the recording medium by the image forming section; and
a second detection mode in which the misregistration is detected without the position detection image being formed by the image forming section.

2. The image inspection apparatus according to claim 1, further comprising an image acquiring section (81) that acquires a read image generated by reading, with a reading section (70), the recording medium on which the image is formed, wherein
the controller controls, in the first detection mode, the image forming section so as to form the position detection image at the predetermined position on the recording medium, and detects the misregistration based on the predetermined position and a position of the position detection image in the read image.

3. The image inspection apparatus according to claim 1, further comprising an image acquiring section (81) that acquires a read image generated by reading, with a reading section (70), the recording medium on which the image is formed, wherein
the controller detects, in the second detection mode, the misregistration based on a reference image stored in a storage section and the read image.

4. The image inspection apparatus according to claim 3, wherein
the controller detects, in the second detection mode, the misregistration based on alignment by image matching using an image included in the reference image and an image included in the read image.

5. The image inspection apparatus according to claim 4, wherein
the controller detects the misregistration based on an edge of the recording medium detected from the read image after the alignment.

6. The image inspection apparatus according to claim 3, wherein
the controller further performs an inspection of presence or absence of an abnormality in the read image based on the reference image and the read image.

7. An image inspection apparatus (100) comprising:
an image acquiring section that acquires a read image generated by reading, with a reading section, a recording medium on which an image is formed by an image forming section; and
a controller that inspects presence or absence of an abnormality in the read image based on a reference image stored in a storage section and the read image, wherein
the controller acquires information relating to a misregistration of the image formed on the recording medium based on the reference image and the read image, and controls an image formation position in the image forming section based on the acquired information relating to the misregistration of the image.

8. An image forming apparatus (100) comprising:
the image inspection apparatus according to any one of claims 1 to 7;
the image forming section; and
a reading section that generates a read image by reading the recording medium on which the image is formed.

9. An image inspection method for detecting a misregistration of an image formation position on a recording medium on which an image is formed by an image forming section, the image inspection method comprising:
a first detection mode in which the misregistration is detected based on a formation position of a position detection image formed at a predetermined position on the recording medium by the image forming section; and
a second detection mode in which the misregistration is detected without the position detection image being formed by the image forming section.

10. An image inspection method comprising:
an image acquiring step of acquiring a read image generated by reading, with a reading section, a recording medium on which an image is formed by an image forming section;
an inspection step of inspecting presence or absence of an abnormality in the read image based on a reference image stored in a storage section and the read image; and
a control step of acquiring information relating to a misregistration of the image formed on the recording medium based on the reference image and the read image, and controlling an image formation position in the image forming section based on the acquired information relating to the misregistration of the image.

11. A program for a computer that detects a misregistration of an image formation position on a recording medium on which an image is formed by an image forming section, the program causing the computer to function as a controller that has:
a first detection mode in which the misregistration is detected based on a formation position of a position detection image formed at a predetermined position on the recording medium by the image forming section; and
a second detection mode in which the misregistration is detected without the position detection image being formed by the image forming section.

12. A program for causing a computer to perform:
an image acquiring step that is acquiring a read image generated by reading, with a reading section, a recording medium on which an image is formed by an image forming section;
an inspection step that is inspecting presence or absence of an abnormality in the read image based on a reference image stored in a storage section and the read image; and
a control step that is acquiring information relating to a misregistration of the image formed on the recording medium based on the reference image and the read image, and controlling an image formation position in the image forming section based on the acquired information relating to the misregistration of the image.
